# FASCICULE DE BREVET EUROPEEN

(11) **EP 4 128 457 B1**
(45) Date de publication et mention de la délivrance du brevet: **25.06.2025**
(21) Numéro de dépôt: 21723321.2
(22) Date de dépôt: 01.04.2021
(51) Int. Cl.: H02G 3/08, H02G 15/10, H02G 3/22

(54) **BOITIER DE RACCORDEMENT D'UNE TRAVERSEE ELECTRIQUE D'ENCEINTE DE CONFINEMENT**
ANSCHLUSSDOSE FÜR EINE ELEKTRISCHE DURCHFÜHRUNG EINER SICHERHEITSKAMMER
CONNECTING BOX FOR A CONTAINMENT CHAMBER ELECTRICAL FEEDTHROUGH

(30) Priorité: 01.04.2020 FR 2003264
(43) Date de publication de la demande: 08.02.2023
(73) Titulaire: Mirion Technologies (IST France), 18110 Fussy (FR)
(72) Inventeur: FRAGNON, Bertrand, 18110 SAINT ELOY DE GY (FR); PELISSIER, Jules, 18000 BOURGES (FR)
(74) Mandataire: Regimbeau
(86) Numéro de dépôt international: PCT/FR2021/050579
(87) Numéro de publication internationale: WO 2021/198623

(56) Documents cités:
- EP-A2- 2 811 601
- CN-A- 108 347 029
- DE-A1- 102017 215 871
- FR-A1- 3 030 138
- JP-A- S5 546 814
- JP-A- S63 206 108
- JP-U- S59 138 316

## Description

### DOMAINE DE L'INVENTION

L'invention concerne un boîtier de raccordement d'une traversée électrique d'une enceinte de confinement de réacteur nucléaire.

### ETAT DE LA TECHNIQUE

Dans les centrales nucléaires, le réacteur est généralement entouré d'une enceinte de confinement qui protège le réacteur contre les agressions externes et protège l'environnement des produits radioactifs qui sinon pourraient être émis dans l'air ou dans l'eau hors du circuit primaire en cas d'accident.

Une enceinte de confinement peut comprendre une ou plusieurs parois en béton armé, pouvant présenter par exemple une épaisseur d'un mètre, et une peau interne en métal.

Cependant, certains équipements situés à l'intérieur de l'enceinte doivent être reliés à des circuits électriques. A cet effet, des ouvertures sont ménagées à travers la ou les paroi(s) de l'enceinte. Chaque ouverture comprend un fourreau noyé dans le matériau formant la paroi. Une traversée électrique est insérée à l'intérieur du fourreau et soudée ou bridée à celui-ci.

Ces traversées électriques assurent le raccordement de plusieurs types de câbles à travers l'enceinte de confinement, tout en maintenant l'intégrité de l'étanchéité de l'enceinte dans tous les cas de fonctionnement (normal ou accidentel).

Une traversée électrique comprend un conteneur, présentant généralement une forme cylindrique de révolution, et une série de modules de conducteurs électriques (ou barreaux) s'étendant à l'intérieur du conteneur.

Le conteneur est soudé sur la peau interne de l'enceinte de confinement.

Chaque traversée électrique comprend typiquement entre 10 et 30 modules et chaque module peut comprendre entre 1 et 50 conducteurs électriques.

Ainsi, une même traversée électrique peut comprendre jusqu'à 900 conducteurs électriques.

Certains modules de conducteurs peuvent comprendre des conducteurs haute tension (HT) pour des circuits de 1 kV à 15 kV en courant alternatif.

D'autres modules de conducteurs peuvent comprendre des conducteurs basse tension (BT) pour des circuits de 230 V à 1000 V en courant alternatif.

D'autres modules de conducteurs peuvent comprendre des conducteurs pour circuits de contrôle de 230 V à 440 V en courant alternatif et des circuits en courant continu pour l'instrumentation.

De cette manière, la traversée électrique permet d'assurer une continuité des divers circuits électriques entre l'extérieur et l'intérieur de l'enceinte de confinement.

A chaque extrémité de la traversée électrique, les conducteurs des modules de conducteurs sont raccordés à des câbles électriques via des modes de raccordement. Les modes de raccordement peuvent inclure par exemple des connecteurs électriques, des plages de raccordement, des borniers, ou des connecteurs sertis.

Des boitiers de raccordement sont fixés sur le conteneur de la traversée électrique, à chaque extrémité de la traversée électrique, pour supporter et protéger les modes de raccordement des câbles. Des boîtier de raccordement sont connus d'après le document DE102017215871A1 et JPS59138316U.

Les boîtiers doivent être conçus pour résister aux impacts dus à la chute d'objets (par exemple des outils ou des pièces métalliques) pouvant survenir pendant la période d'installation, et pouvoir supporter le poids d'un homme.

Une fois installés, en fonctionnement normal, ces boîtiers doivent protéger les modes de raccordement des projections d'eau lors du lavage des parois de l'enceinte ou lors du déclenchement des systèmes de protections contre les incendies.

Ces boîtiers doivent également permettre à des opérateurs d'accéder aux modes de raccordement pour raccorder les conducteurs aux câbles électriques, ou de remplacer ou d'ajouter des modules de conducteurs.

De plus, en cas d'accident, ces boîtiers doivent être capables de protéger les modes de raccordement de l'aspersion d'eau boriquée (c'est-à-dire de l'eau contenant de l'acide borique qui peut être utilisée en cas d'accident pour neutraliser la réaction neutronique).

Il en résulte de ces boîtiers peuvent être lourds et encombrants. A titre indicatif, un boîtier peut peser jusqu'à 140 kg. Dans certains cas, l'installation d'un boîtier à l'extrémité d'une traversée électrique peut nécessiter l'utilisation d'engins de levage. Or, la zone dans laquelle est installé le boîtier peut être étroite ou encombrée, ce qui complexifie les opérations d'installation.

L'installation du boîtier est d'autant plus délicate que le nombre de conducteurs électriques à l'extrémité de la traversée électrique est important.

Cette complexité d'installation du boîtier peut causer, lors d'une mauvaise manipulation, un endommagement des conducteurs électriques.

### RESUME DE L'INVENTION

Un but de l'invention est de proposer un boîtier de raccordement d'une traversée électrique d'enceinte de confinement, qui soit plus facile à installer et qui permette d'intervenir sur les modules de la traversée électrique sans devoir au préalable déconnecter les câbles électriques.

Ce but est atteint dans le cadre de la présente invention grâce à un boîtier de raccordement d'une traversée électrique d'enceinte de confinement, comprenant :
un châssis formé en une seule pièce unique de matériau, le châssis comprenant une première partie de châssis destinée à être disposée transversalement par rapport à un axe longitudinal de la traversée électrique, la première partie de châssis présentant une première ouverture circulaire propre à entourer une extrémité de la traversée électrique pour fixer le châssis sur l'extrémité de la traversée électrique, et un deuxième partie de châssis s'étendant à partir de la première partie de châssis, parallèlement à l'axe longitudinal de la traversée électrique, pour supporter une plaque de presse-étoupes pour le passage de câbles entre l'extérieur du boîtier et l'intérieur du boîtier, et
une pluralité de pièces de boîtier propres à être fixées de manière démontable sur le châssis pour former une enveloppe de protection autour de modes de raccordement des câbles électriques à la traversée électrique, dans lequel la pluralité de pièces de boîtier comprend un cadre de fond propre à être fixé sur la deuxième partie de châssis, de sorte que les modes de raccordement se trouvent disposés entre la deuxième partie de châssis et le cadre de fond, et une traverse longitudinale présentant une première extrémité propre à être fixée sur la première partie de châssis et une deuxième extrémité propre à être fixée sur le cadre de fond.

Dans un tel boîtier, les pièces de boîtier formant l'enveloppe de protection peuvent être démontées, alors que le châssis qui est traversé par les câbles électriques, reste fixé sur la traversée électrique. Il est ainsi possible d'intervenir sur les modules de la traversée électrique sans devoir au préalable déconnecter tous les câbles électriques.

En outre, lors de l'installation, le châssis et les pièces de boîtiers peuvent être transportés séparément. Le poids individuel du châssis et de chacune des pièces de boîtier est inférieur au poids total du boîtier. Le poids du châssis peut par exemple être de l'ordre de 20 à 30 kg, de sorte qu'il peut être transporté par un opérateur. L'encombrement du châssis est également inférieur à l'encombrement du boîtier complet, ce qui facilite son montage, y compris dans des espaces exigus, et évite des erreurs de manipulation qui risqueraient d'endommager les conducteurs électriques.

Le boîtier proposé peut en outre présenter les caractéristiques suivantes :
- le boîtier comprend des organes de fixation et les pièces de boîtier sont propres à être fixées au châssis par le biais des organes de fixation ;
- le boîtier comprend un joint propre à être interposé entre le châssis et une pièce de boîtier de la pluralité de pièces de boîtier,
- le boitier comprend un joint propre à être interposé entre deux pièces de boîtier de la pluralité de pièces de boîtier,
- le boîtier comprend une plaque de fond propre à être fixée sur le cadre de fond ;
- le boîtier comprend un joint propre à être interposé entre le cadre de fond et la deuxième partie de châssis pour former une liaison étanche entre le cadre de fond et la deuxième partie de châssis ;
- le joint présente une portion de fixation propre à être fixée à l'un du cadre de fond et de la deuxième partie de châssis, et une portion de jonction propre à être pressée entre le cadre de fond et la deuxième partie de châssis ;
- le boîtier comprend un premier joint propre à être interposé entre la première partie de châssis et la première extrémité de la traverse longitudinale pour former une première liaison étanche entre la première partie de châssis et la traverse, et un deuxième joint propre à être interposé entre le cadre de fond et la deuxième extrémité de la traverse longitudinale pour former une deuxième liaison étanche entre le cadre de fond et la traverse longitudinale ;
- le premier joint présente une portion de fixation propre à être fixée à l'un de la première partie de châssis et de la traverse longitudinale, et une portion de jonction propre à être pressée entre la première partie de châssis et la première extrémité de la traverse longitudinale, et/ou le deuxième joint présente une portion de fixation propre à être fixée à l'un du cadre et de la traverse longitudinale, et une portion de jonction propre à être pressée entre le cadre et la deuxième extrémité de la traverse longitudinale ;
- le boîtier comprend un capot propre à être monté sur la traverse longitudinale, le capot pouvant être démonté pour autoriser un accès par un opérateur aux modes de raccordement ;
- le capot s'étend d'un côté de la traverse longitudinale, et le boîtier comprend un autre capot s'étendant d'un autre côté de la traverse longitudinale et propre à être monté sur la traverse longitudinale, l'autre capot pouvant être démonté de manière à autoriser un accès par un opérateur aux modes de raccordement ;
- chaque capot comprend un premier panneau propre à être fixé sur la traverse longitudinale, et un deuxième panneau s'étendant à partir du premier panneau, en formant un angle non-nul avec le premier panneau ;
- le boîtier comprend une plaque de presse-étoupes propre à être fixée sur la deuxième partie de châssis pour le passage de câbles entre l'extérieur du boîtier de raccordement et l'intérieur du boîtier de raccordement renfermant les modes de raccordement raccordant les câbles électriques à la traversée électrique ;
- le boîtier comprend une couronne de fixation par l'intermédiaire de laquelle la première partie de châssis est fixée à la traversée électrique, la couronne de fixation étant propre à être fixée sur la traversée électrique et à être fixée sur la première partie de châssis ;
- la couronne de fixation comprend une portion annulaire axiale propre à être fixée sur la traversée électrique et une portion annulaire radiale s'étendant à partir de la portion annulaire axiale et propre à être fixée sur la première partie de châssis ;
- la première partie de châssis et la deuxième partie de châssis sont soudées entre elles ;
- la première partie de châssis comprend une paroi de guidage propre à entourer les câbles électriques entre la plaque de presse-étoupe et les modes de raccordement.

L'invention concerne en outre un ensemble de traversée électrique d'enceinte de confinement, comprenant :
une traversée électrique comprenant un conteneur cylindrique et une pluralité de modules de conducteurs électriques s'étendant à l'intérieur du conteneur, parallèlement à un axe longitudinal de la traversée électrique, et
un premier boîtier tel que décrit précédemment, fixé à une première extrémité du conteneur de la traversée électrique.

L'ensemble de traversée électrique d'enceinte de confinement peut comprendre également un deuxième boîtier tel que décrit précédemment, fixé à une deuxième extrémité du conteneur de la traversée électrique, opposée à la première extrémité.

Le deuxième boîtier peut être identique au premier boîtier.

L'invention concerne également un procédé de montage d'un boîtier de raccordement d'une traversée électrique d'enceinte de confinement, comprenant des étapes de :
- fixer un châssis sur une extrémité de la traversée électrique, avec une première partie de châssis disposée transversalement par rapport à un axe longitudinal de la traversée électrique et présentant une première ouverture circulaire qui entoure une extrémité de la traversée électrique, et une deuxième partie de châssis s'étendant à partir de la première partie de châssis, parallèlement à l'axe longitudinal de la traversée électrique,
- raccorder des câbles électriques à la traversée électrique par le biais de modes de raccordement, en faisant passer les câbles électriques à travers une deuxième ouverture de la deuxième partie de châssis, et
- après avoir fixé le châssis à l'extrémité de la traversée électrique, fixer une pluralité de pièces de boîtier de manière démontable sur le châssis pour former une enveloppe de protection autour des modes de raccordement des câbles électriques.

L'étape consistant à fixer une pluralité de pièces de boîtier de manière démontable sur le châssis peut être réalisée avant l'étape consistant à raccorder des câbles électriques à la traversée électrique, ou après.

### PRESENTATION DES DESSINS

D'autres caractéristiques et avantages de l'invention ressortiront encore de la description qui suit, laquelle est purement illustrative et non limitative, et doit être lue en regard des dessins annexés, parmi lesquels :
- la figure 1 représente de manière schématique un ensemble de traversée électrique, comprenant une traversée électrique et deux boîtiers de raccordement,
- les figures 2 et 3 représentent, de manière schématique, respectivement en vue de devant et en vue de derrière, un boîtier de raccordement de traversée électrique, conforme à un premier mode de réalisation de l'invention,
- la figure 4 représente, de manière schématique, en vue éclatée, le boîtier de raccordement de traversée électrique des figures 2 et 3,
- la figure 5 représente, de manière schématique, en vue en coupe longitudinale, le boîtier de raccordement de traversée électrique de la figure 1,
- les figures 6 et 7 sont des vues de détail de la figure 5,
- la figure 8 représente, de manière schématique, un joint faisant partie du boîtier de raccordement de traversée électrique,
- les figures 9 et 10 représentent, de manière schématique, respectivement en vue de devant et en vue de derrière, un boîtier de raccordement de traversée électrique, conforme à un deuxième mode de réalisation de l'invention,
- la figure 11 représente, de manière schématique, en vue éclatée, le boîtier de raccordement de traversée électrique des figures 9 et 10.

### DESCRIPTION DETAILLEE D'UN MODE DE REALISATION

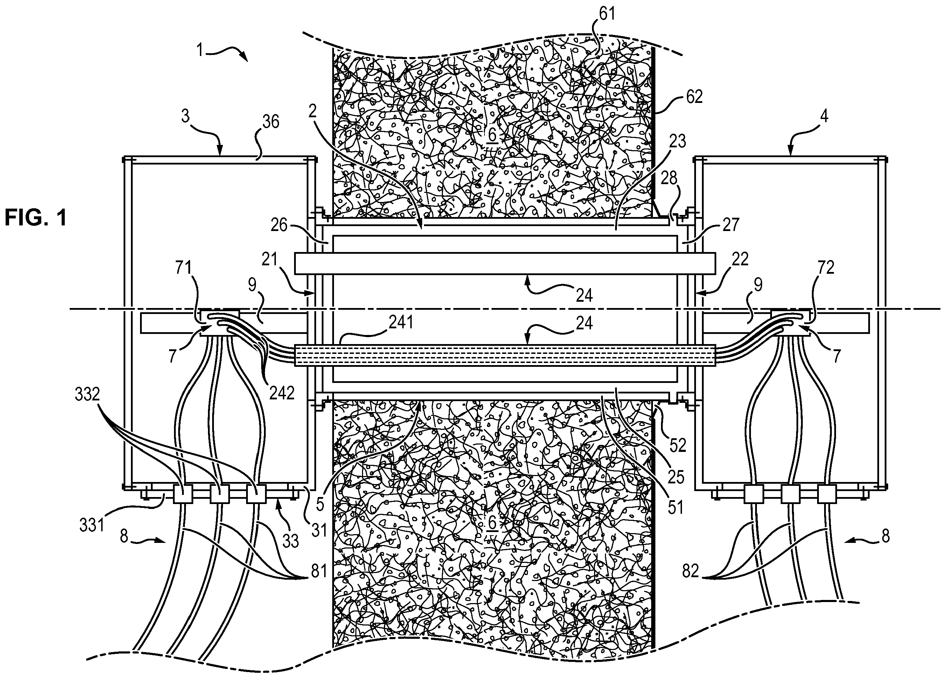

Sur la figure 1, l'ensemble de traversée électrique 1 représenté comprend une traversée électrique 2 et deux boîtiers de raccordement 3 et 4.

La traversée électrique 2 présente une première extrémité 21 et une deuxième extrémité 22, opposée à la première extrémité 21. La traversée électrique comprend un conteneur 23 et une pluralité de modules de conducteurs électriques 24 s'étendant à l'intérieur du conteneur 23.

Le conteneur 23 comprend une paroi 25 présentant une forme générale cylindrique de révolution, avec un axe de révolution X, une première paroi d'extrémité 26, une deuxième paroi d'extrémité 27 et une bride 28 s'étendant radialement à partir de la paroi 27 et autour de la paroi 27. Le conteneur 23 est formé en métal, par exemple en acier inoxydable ou en acier au carbone.

Les modules 24 s'étendent parallèlement à l'axe X depuis la première extrémité 21 de la traversée électrique 2 jusqu'à la deuxième extrémité 22 de la traversée électrique 21. Chaque module 24 comprend un barreau comprenant une gaine 241 et une pluralité de conducteurs électriques 242 s'étendant à l'intérieur de la gaine 241. La gaine 241 peut être formée en métal, par exemple en acier inoxydable. Les conducteurs électriques 242 sont maintenus serrés entre eux à l'intérieur de la gaine 241. A cet effet, lors de la fabrication du module 24, la gaine 241 est rétreinte autour des conducteurs électriques 242.

Sur la figure 1, la traversée électrique 2 s'étend à l'intérieur d'un fourreau 5 disposé dans une ouverture d'un mur d'enceinte de confinement 6. De cette manière, la première extrémité 21 de la traversée électrique 2 s'étend à l'extérieur de l'enceinte de confinement et la deuxième extrémité 22 de la traversée électrique 2 s'étend à l'intérieur de l'enceinte de confinement. La bride 28 de la traversée électrique 28 est soudée au fourreau 5.

Le mur d'enceinte de confinement 6 comprend une paroi 61 en béton et une peau interne 62 en métal.

Le fourreau 5 comprend une paroi 51 présentant une forme générale cylindrique de révolution, et une bride 52 s'étendant radialement à partir de la paroi 51. La bride 52 est soudée à la peau interne 62 du mur d'enceinte de confinement 6.

Les deux boîtiers de raccordement 3 et 4 incluent un premier boîtier de raccordement 3, fixé à la première extrémité 21 de la traversée électrique 2, et un deuxième boîtier de raccordement 4, fixé à la deuxième extrémité 22 de la traversée électrique 2.

Dans l'exemple illustré sur la figure 1, le deuxième boîtier de raccordement 4 peut être identique au premier boîtier de raccordement 3.

Chaque boîtier de raccordement 3, 4 renferme des modes de raccordement 7, permettant de raccorder les conducteurs électriques 242 à des câbles électriques 8. Les modes de raccordement 7 peuvent inclure des connecteurs électriques, des plages de raccordement, des borniers, ou des connecteurs sertis.

L'ensemble de traversée électrique 1 comprend des supports 9 et des modes de raccordement 7 fixés sur les supports 9.

Les supports 9 sont par exemple des supports tubulaires. Les modes de raccordement 7 incluent des premiers modes de raccordement 71 situés à l'intérieur du premier boîtier 3 et des deuxièmes modes de raccordement 72 situés à l'intérieur du deuxième boîtier 4.

Sur la figure 1, seuls deux supports 9 ont été représentés. Toutefois, en pratique, l'ensemble de traversée peut comprendre un plus grand nombre de supports 9. L'un des supports 9 est fixé à la première extrémité 21 de la traversée électrique 2 et s'étend à l'intérieur du premier boîtier 3. L'autre des supports 9 est fixé à la deuxième extrémité 22 de la traversée électrique 2 et s'étend à l'intérieur du deuxième boîtier 4.

Les câbles électriques 8 incluent des premiers câbles électriques 81 s'étendant à l'extérieur de l'enceinte et des deuxièmes câbles électriques 82 s'étendant à l'intérieur de l'enceinte.

Les premiers câbles électriques 81 s'étendent partiellement à l'intérieur du premier boîtier 3. Plus précisément, chacun des premiers câbles électriques 81 a une extrémité située à l'intérieur du premier boîtier 3 et une autre extrémité située à l'extérieur du premier boîtier 3. L'extrémité de chaque câble 81 située à l'intérieur du premier boîtier 3 est raccordée à un ou plusieurs conducteurs électrique(s) 242 via l'un des modes de raccordement 71.

De même, les deuxièmes câbles électriques 82 s'étendent partiellement à l'intérieur du deuxième boîtier 4. Plus précisément, chacun des deuxièmes câbles électriques 82 a une extrémité située à l'intérieur du deuxième boîtier 4 et une autre extrémité située à l'extérieur du deuxième boîtier 4. L'extrémité de chaque câble 82 située à l'intérieur du deuxième boîtier 4 est raccordée à un ou plusieurs conducteurs électrique(s) 242 via l'un des modes de raccordement 72.

De cette manière, l'ensemble de traversée électrique 2 permet de raccorder les premiers câbles électriques 81 aux deuxièmes câbles électriques 82 à travers le mur d'enceinte de confinement 6, tout en maintenant l'intégrité de l'étanchéité de l'enceinte.

Le premier boîtier 3 permet de protéger les modes de raccordement 71 situés à l'extérieur de l'enceinte. Le deuxième boîtier 4 permet de protéger les modes de raccordement 72 situés à l'intérieur de l'enceinte.

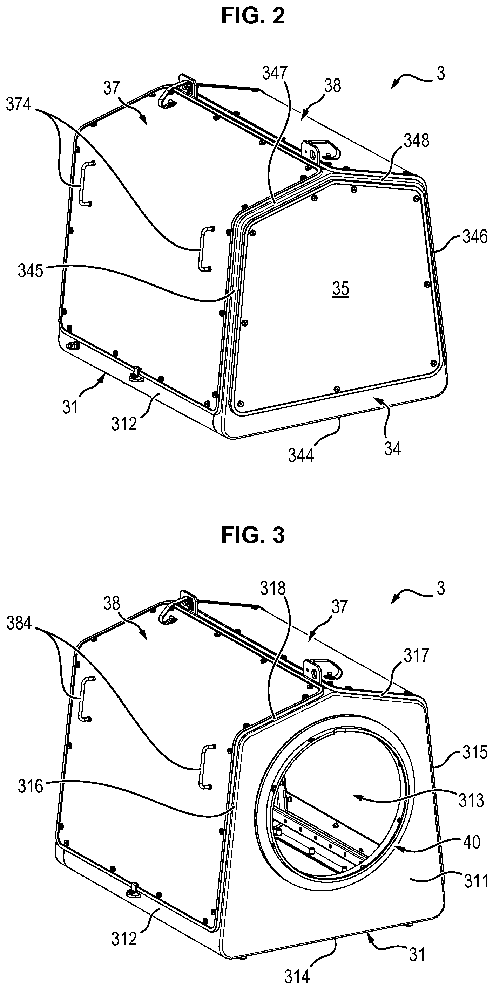

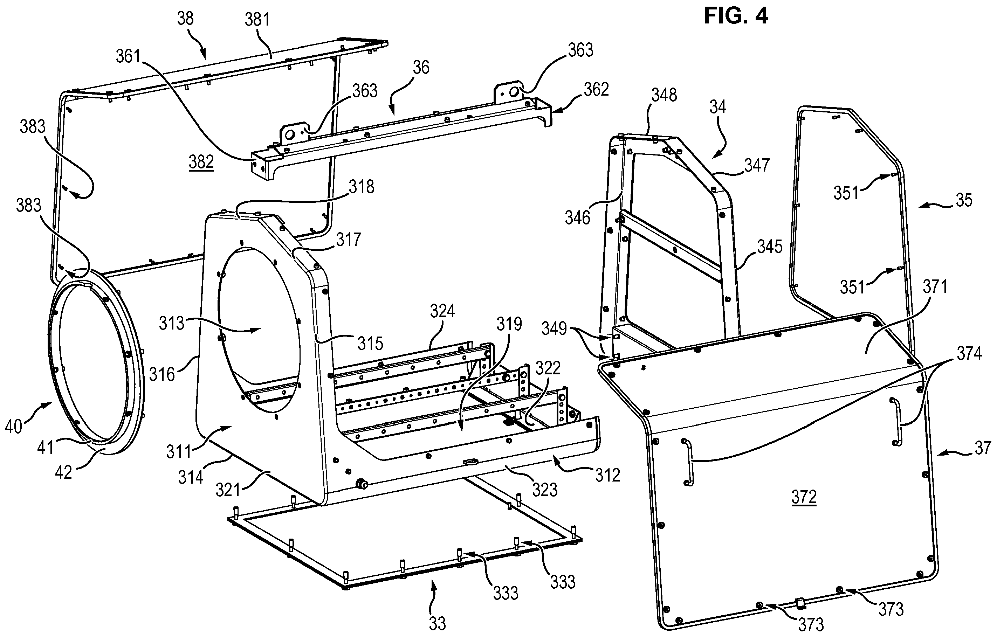

Les figures 2 à 4 représentent de manière schématique un premier boîtier de raccordement 3 conforme à un premier mode de réalisation de l'invention. Il est à noter que le deuxième boîtier de raccordement 4 peut être identique au premier boîtier de raccordement 3 et ne sera donc pas décrit en détails.

Le boîtier de raccordement 3 comprend un châssis 31 et une pluralité de pièces de boîtier 33 à 38, propres à être fixées de manière démontable sur le châssis 31. Les pièces de boîtier 33 à 38 sont séparées du châssis 31. Les pièces de boîtier ne sont pas soudées sur le châssis.

En revanche, le châssis 31 est formé en une seule pièce unique de matériau, par exemple par pliage ou emboutissage d'une tôle, ou en plusieurs pièces soudées entre elles. Le châssis 31 est formé en métal, par exemple en acier inoxydable. Le châssis 31 est un châssis en équerre. Le châssis comprend une première partie de châssis 311 et une deuxième partie de châssis 312. Dans l'exemple illustré sur les figures 2 à 4, la première partie de châssis 311 et la deuxième partie de châssis 312 sont soudées entre elles.

La première partie de châssis 311 est destinée à être disposée transversalement par rapport à l'axe longitudinal X de la traversée électrique 2. La première partie de châssis 311 présente une première ouverture circulaire 313 propre à entourer une extrémité de la traversée électrique 2 pour fixer le châssis 31 sur la traversée électrique 2. La première partie de châssis 311 présente une unique première ouverture circulaire 313 propre à entourer une extrémité de la traversée électrique 2.

La première partie de châssis 311 présente un bord inférieur transversal 314, deux bords latéraux 315, 316 et deux bords supérieurs 317, 318.

La deuxième partie de châssis 312 s'étend à partir de la première partie de châssis 311, parallèlement à l'axe longitudinal de la traversée électrique 2. La deuxième partie de châssis 312 présente une deuxième ouverture 319 pour le passage des câbles électriques 8 entre l'extérieur du boîtier de raccordement et l'intérieur du boîtier de raccordement.

La deuxième partie de châssis 312 présente deux bords transversaux 321, 322 et deux bords longitudinaux 323, 324. Le bord inférieur transversal 314 de la première partie de châssis 311 est relié au bord transversal 321 de la deuxième partie de châssis 312.

Dans le mode de réalisation illustré sur les figures 2 à 4, la pluralité de pièces de boîtier 33 à 38 comprend un support de presse-étoupes 33, un cadre de fond 34, une plaque de fond 35, une traverse 36, et deux capots 37, 38.

Le support de presse-étoupes 33 comprend une plaque de support de presse-étoupes 331 et une pluralité de presse-étoupes 332 propres à enserrer les câbles électriques 8. Les presse-étoupes 332 sont fixés sur la plaque de support de presse-étoupes 331. Les presse-étoupes 332 permettent le passage des câbles électriques 8 à travers la plaque de support de presse-étoupe 331, tout en assurant leur maintien mécanique sur la plaque de support de presse-étoupe 331 et une étanchéité entre la plaque de support de presse-étoupe 331 et les câbles électriques 8, pour empêcher une pénétration de corps étrangers à l'intérieur du boîtier de raccordement 3.

Le support de presse-étoupe 33 est propre à être fixé sur la deuxième partie de châssis 312, de sorte que la plaque de support de presse-étoupe 331 ferme la deuxième ouverture 319.

A cet effet, le support de presse-étoupe 33 comprend des vis 333, propres à être vissées dans des orifices correspondants de la deuxième partie de châssis 312. Les orifices correspondants de la deuxième partie de châssis 312 sont répartis autour de la deuxième ouverture 319.

Le boîtier de raccordement 3 comprend un joint d'étanchéité disposé entre la deuxième partie de châssis 312 et le support de presse-étoupe 33 pour éviter une pénétration de corps étrangers à l'intérieur du boîtier de raccordement 3.

Le cadre de fond 34 est propre à être fixé sur la deuxième partie de châssis 312. Lorsqu'il est fixé sur la deuxième partie de châssis 312, le cadre de fond 34 s'étend sensiblement parallèlement à la première partie de châssis 311, de sorte que les modes de raccordement 7 se trouvent disposés entre la deuxième partie de châssis 312 et le cadre de fond 34.

Le cadre de fond 34 présente un bord inférieur transversal 344, deux bords latéraux 345, 346 et deux bords supérieurs 347, 348.

Le bord inférieur transversal 344 est propre à être fixé sur la deuxième partie de châssis 312. A cet effet, le cadre de fond 34 comprend des vis de fixation 349 propres à être vissées dans des orifices correspondants de la deuxième partie de châssis 312. Les bords latéraux 345, 346 s'étendent chacun à partir d'une extrémité respective du bord inférieur transversal 344. Les bords supérieurs 347, 348 s'étendent chacun à partir d'une extrémité d'un bord latéral 345, 346 respectif. Les bords supérieurs 347, 348 se rejoignent entre eux en formant un angle non-plat.

La plaque de fond 35 est propre à être fixée sur le cadre de fond 34.

A cet effet, la plaque de fond 35 comprend des vis de fixation 351 propres à être vissés dans des orifices correspondants du cadre de fond 34. Le boîtier de raccordement 3 comprend un joint d'étanchéité disposé entre le cadre de fond 34 et la plaque de fond 35 pour éviter une pénétration de corps étrangers à l'intérieur du boîtier de raccordement 3.

La traverse 36 présente une première extrémité 361 propre à être fixée à la première partie de châssis 311 et une deuxième extrémité 362, opposée à la première extrémité 331 et propre à être fixée au cadre de fond 34. Une fois fixée sur la première partie de châssis 311 et sur le cadre de fond 34, la traverse 36 présente une forme allongée et a un axe longitudinal qui s'étend selon une direction parallèle à l'axe longitudinal X de la traversée électrique 2. La traverse 36 présente en outre des pattes d'attache 363 présentant des orifices permettant l'introduction de crochets de levage pour permettre la manutention du boîtier de raccordement 3 en cas de nécessité.

Les capots 37, 38 sont propres à être fixés sur la traverse 36, en s'étendant de part et d'autre de la traverse 36.

Dans le mode de réalisation illustré sur les figures 1 à 4, les capots 37 et 38 sont identiques entre eux.

Plus précisément, chaque capot 37, 38 comprend un premier panneau 371, 381 et un deuxième panneau 372, 382 s'étendant à partir du premier panneau 371, 381, en formant un angle non-nul avec le premier panneau 371, 381.

Chaque capot 37, 38 est propre à être fixé sur la traverse 36, sur le châssis 31 et sur le cadre de fond 34. A cet effet, chaque capot 37, 38 comprend des vis de fixation 373, 383 propres à être vissées dans des orifices correspondants de la traverse 36, du châssis 31 et du cadre de fond 34.

Chaque capot 37, 38 est ainsi fixé de manière démontable sur le châssis 31, sur la traverse 36 et sur le cadre de fond 34. Lorsqu'il est fixé sur le châssis 31, sur la traverse 36 et sur le cadre de fond 34 (c'est-à-dire en position fermée), le capot 37 ou 38 interdit l'accès aux modes de raccordement 7 contenus dans le boîtier de raccordement 3. Le capot 37 ou 38 peut être retiré (c'est-à-dire en position ouverte) pour autoriser un accès par un opérateur aux modes de raccordement 7 contenus dans le boîtier.

Du fait qu'il comprend deux panneaux 371, 372 ou 381, 382 formant un angle non-nul entre eux, le capot 37 ou 38 permet de dégager une large ouverture lorsqu'il est retiré, ce qui facilite l'accès aux modes de raccordement 7 et aux modules de conducteurs électriques 24 de la traversée électrique 2.

En position fermée, les bords du capot 37, 38 viennent en appui sur la traverse 36, le cadre de fond 34, et le châssis 31, pour fermer le boîtier de raccordement 3. Chaque capot 37, 38 peut en outre comprendre un joint s'étendant le long des bords du capot et par l'intermédiaire duquel le capot vient en contact de manière étanche avec la traverse 36, le cadre de fond 34 et le châssis 31 pour éviter une pénétration de corps étrangers à l'intérieur du boîtier de raccordement 3.

Le capot 37 comprend des poignées 374 pouvant être saisies par un opérateur pour manipuler le capot 37. Les poignées 374 sont fixées sur le premier panneau 371 du capot 37. De même, le capot 38 comprend des poignées 384 pouvant être saisies par un opérateur pour manipuler le capot 38. Les poignées 384 sont fixées sur le premier panneau 381 du capot 38.

Le boîtier de raccordement 3 comprend également une couronne de fixation 40.

La couronne de fixation 40 comprend une portion annulaire axiale 41 propre à être fixée sur la traversée électrique 2 et une portion annulaire radiale 42 s'étend à partir de la portion annulaire axiale 41, la portion annulaire radiale 42 étant propre à être fixée sur la première partie de châssis 311.

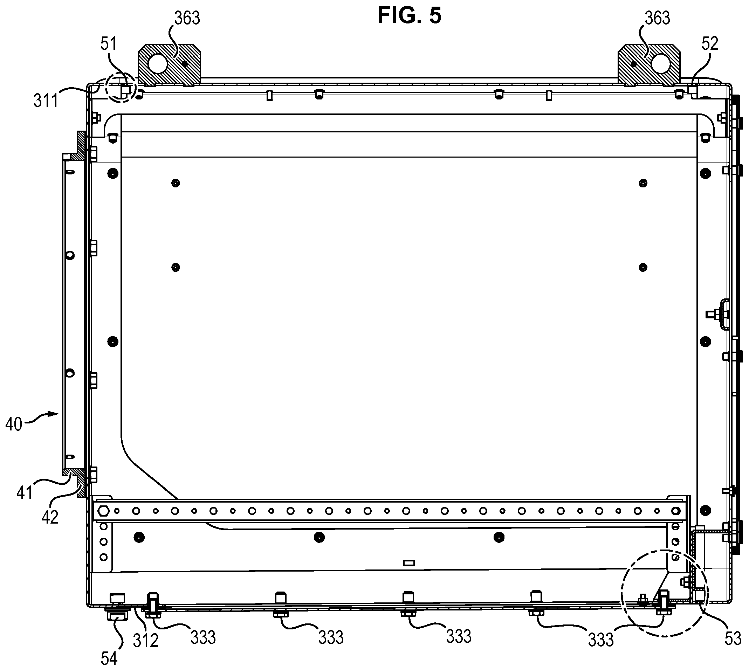

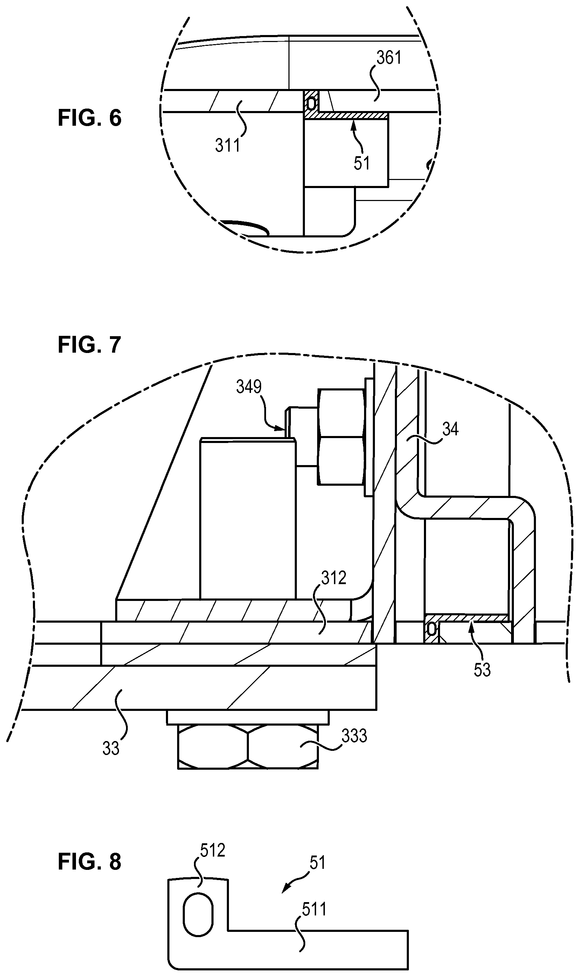

Comme illustré sur les figures 5 et 6, le boîtier de raccordement 3 comprend en outre un premierjoint 51 propre à être interposé entre la première partie de châssis 311 et la première extrémité 361 de la traverse 36 pour former une première liaison étanche entre le châssis 311 et la traverse 36.

La figure 8 illustre de manière schématique un exemple de premier joint 51. Le premier joint 51 présente une portion de fixation 511, et une portion de jonction 512, s'étendant à partir de la portion de fixation 511.

La portion de fixation 511 est propre à être fixée sur la traverse 36. La portion de fixation 511 présente la forme d'une bande. La portion de fixation 511 peut être fixée sur la traverse 36 par exemple par collage. A cet effet, la portion de fixation 511 est enduite d'une couche de colle.

La portion de jonction 512 est propre à être interposée entre la première partie de châssis 311 et la traverse 36. La portion de jonction 512 présente une forme tubulaire creuse. La portion de jonction 512 présente par exemple une section de forme rectangulaire. La portion de jonction 512 est creuse, c'est-à-dire qu'elle comprend une cavité remplie d'air. De cette manière, la portion de jonction 512 est capable d'assurer une liaison étanche entre la première partie de châssis 311 et la traverse 36, tout en absorbant les tolérances d'assemblage entre la première partie de châssis 311 et la traverse 36.

Le boîtier de raccordement 3 comprend également un deuxième joint 52 propre à être interposé entre le cadre de fond 34 et la deuxième extrémité 362 de la traverse pour former une deuxième liaison étanche entre le cadre de fond 34 et la traverse 36. Le deuxième joint 52 est identique au premier joint 51, excepté que la portion de fixation du deuxième joint 52 est fixée sur la traverse 36 et la portion de jonction du deuxième joint 52 est interposée entre le cadre de fond 34 et la traverse 36.

Comme illustré sur la figure 7, le boîtier de raccordement 3 comprend en outre un troisième joint 53 propre à être interposé entre le cadre de fond 34 et la deuxième partie de châssis 312 pour former une liaison étanche entre le cadre de fond 34 et le châssis 31.

Le troisième joint 53 est identique au premier joint 51, excepté que la portion de fixation du troisième joint 53 est fixée sur le cadre de fond 34 et que la portion de jonction du troisième joint 53 est interposée entre le cadre de fond 34 et la deuxième partie de châssis 312. Le troisième joint 53 permet d'absorber les tolérances d'assemblage entre la deuxième partie de châssis 312 et le cadre de fond 34.

Le premier joint 51, le deuxième joint 52 et le troisième joint 53 assurent une étanchéité du boîtier de raccordement 3 entourant les modes de raccordement 7, tout en autorisant l'assemblage et le désassemblage des pièces de boîtier 33 à 38 du châssis 31.

Comme illustré sur la figure 5, le boîtier de raccordement 3 comprend en outre un respirateur 54 permettant d'équilibrer la pression de l'air à l'intérieur du boîtier de raccordement 3 et la pression de l'air à l'extérieur du boîtier de raccordement 3.

Dans l'exemple illustré sur la figure 5, le respirateur 54 est fixé à la deuxième partie de châssis 312 et s'étend à travers celle-ci.

Lors de l'installation, le boîtier de raccordement de traversée électrique 3 peut être monté de la manière suivante :
La couronne de fixation 40 est d'abord positionnée autour d'une extrémité 21 de la traversée électrique 2. La portion annulaire axiale 41 de la couronne de fixation 40 est fixée sur le conteneur 23 de la traversée électrique 2, par exemple au moyen de vis de fixation.

Puis, le châssis 31 est positionné, de sorte que la première ouverture 313 entoure l'extrémité 21 de la traversée électrique 2.

La portion annulaire radiale 42 de la couronne de fixation 40 est fixée sur la première partie de châssis 311, par exemple au moyen de vis de fixation.

Une fois le châssis 31 fixé à la traversée électrique 2, la traversée électrique 2 supporte le châssis 31.

La couronne de fixation 40 permet de concevoir un boîtier de raccordement 3 dans lequel l'ouverture circulaire 313 présente une dimension augmentée pour faciliter l'insertion des conducteurs électriques 242 dans le boîtier de raccordement 3, sans les endommager.

Le support de presse-étoupes 33 est fixé à la deuxième partie de châssis 312. Les extrémités des câbles électriques 8 sont raccordées aux extrémités des conducteurs électriques 242 par le biais de modes de raccordement 7.

Ensuite, les pièces de boîtier 33 à 38 sont assemblées sur le châssis 31 au moyen de vis de fixation pour former le boîtier de raccordement 3 autour des modes de raccordement 7.

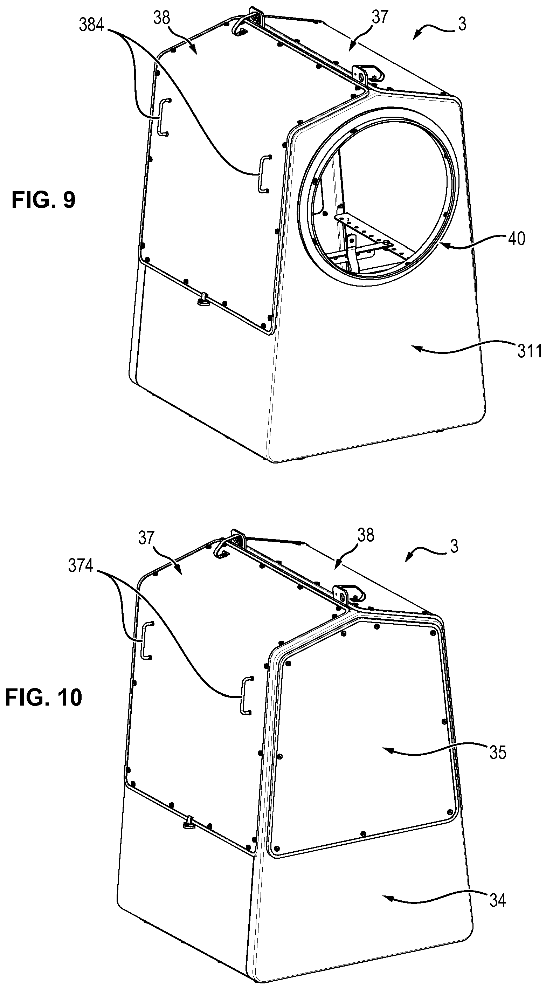

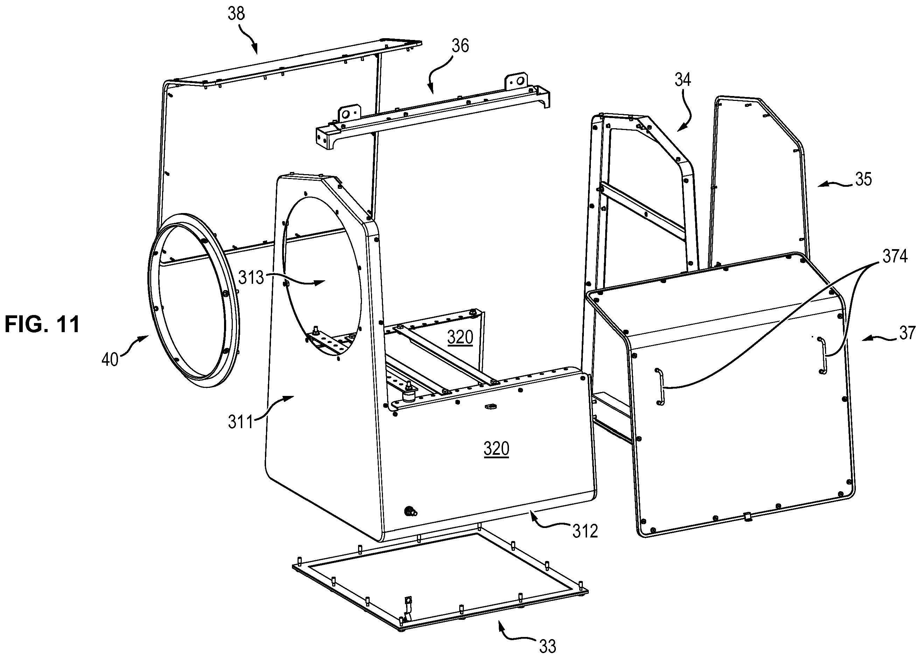

Les figures 9 à 11 représentent, de manière schématique, un boîtier de raccordement de traversée électrique 3, conforme à un deuxième mode de réalisation de l'invention.

Ce deuxième mode de réalisation est identique au premier mode de réalisation illustré sur les figures 2 à 8, excepté que la deuxième partie de châssis 312 inclut une paroi de guidage 320 propre à entourer les câbles électriques 8.

Ce deuxième de réalisation est particulièrement adapté pour les câbles électriques 8 qui ne peuvent pas être soumis à un faible rayon de courbure.

Dans le deuxième mode de réalisation, seul le châssis 31 est différent du châssis 31 du premier mode de réalisation. Les pièces de boîtier 33 à 38 et la couronne de fixation 40 sont identiques à celles du premier mode de réalisation. Ainsi les pièces de boîtier 33 à 38 et la couronne de fixation 40 ne nécessitent pas une reconception. Les mêmes pièces peuvent être utilisées pour le raccordement de câbles haute tension (HT) et basse tension (BT).

D'autres modes de réalisation sont bien entendu envisageables. Par exemple, il serait possible concevoir un boîtier de raccordement dans lequel le nombre, la forme et l'agencement des pièces de boîtier seraient différents.

En outre, les pièces de boîtier pourraient être fixées au châssis par le biais d'organes de fixation, autres que des vis de fixation, par exemple, des rivets, des pinces, des organes de serrage mécaniques, notamment des organes de serrage à genouillère, des goupilles, des pions, des systèmes de fixation quart de tour.

Les ou les capot(s) pourrai(en)t être monté(s) rotatif(s) sur la traverse ou sur une autre pièce de boîtier ou sur le châssis par le biais de charnières. Par exemple, le ou les capot(s) pourrai(en)t être monté(s) rotatif(s) entre une position fermée interdisant l'accès aux modes de raccordement, et une position ouverte autorisant l'accès aux modes de raccordement à l'intérieur du boîtier.

## Revendications

1. Boîtier de raccordement (3) d'une traversée électrique (2) d'enceinte de confinement, comprenant :
un châssis (31) formé en une seule pièce unique de matériau, le châssis (31) comprenant une première partie de châssis (311) destinée à être disposée transversalement par rapport à un axe longitudinal (X) de la traversée électrique (2), la première partie de châssis (311) présentant une première ouverture circulaire (313) propre à entourer une extrémité (21) de la traversée électrique (2) pour fixer le châssis (31) sur l'extrémité (21) de la traversée électrique (2), et une deuxième partie de châssis (312) s'étendant à partir de la première partie de châssis (311), parallèlement à l'axe longitudinal (X) de la traversée électrique (2), pour supporter une plaque de presse-étoupes (331) pour le passage de câbles (81) entre l'extérieur du boîtier de raccordement (3) et l'intérieur du boîtier de raccordement (3), et
une pluralité de pièces de boîtier (33-38) propres à être fixées de manière démontable sur le châssis (31) pour former une enveloppe de protection autour de modes de raccordement (71) raccordant les câbles électriques (81) à la traversée électrique (2),
dans lequel la pluralité de pièces de boîtier (33-38) comprend un cadre de fond (34) propre à être fixé sur la deuxième partie de châssis (312), de sorte que les modes de raccordement (71) se trouvent disposés entre la deuxième partie de châssis (312) et le cadre de fond (34), et une traverse longitudinale (36) présentant une première extrémité (361) propre à être fixée sur la première partie de châssis (311) et une deuxième extrémité (362) propre à être fixée sur le cadre de fond (34).

2. Boîtier selon la revendication 1, comprenant une plaque de fond (35) propre à être fixée sur le cadre de fond (34).

3. Boîtier selon l'une des revendications 1 et 2, comprenant un joint (53) propre à être interposé entre le cadre de fond (34) et la deuxième partie de châssis (312) pour former une liaison étanche entre le cadre de fond (34) et la deuxième partie de châssis (312) ; et
dans lequel le joint (53) présente de préférence une portion de fixation propre à être fixée à l'un du cadre de fond (34) et de la deuxième partie de châssis (312), et une portion de jonction propre à être pressée entre le cadre de fond (34) et la deuxième partie de châssis (312).

4. Boîtier selon l'une des revendications 1 à 3, comprenant un premier joint (51) propre à être interposé entre la première partie de châssis (311) et la première extrémité (361) de la traverse longitudinale (36) pour former une première liaison étanche entre la première partie de châssis (361) et la traverse (36), et un deuxième joint (52) propre à être interposé entre le cadre de fond (34) et la deuxième extrémité (362) de la traverse longitudinale (36) pour former une deuxième liaison étanche entre le cadre de fond (34) et la traverse longitudinale (36).

5. Boîtier selon la revendication 4, dans lequel le premier joint (51) présente une portion de fixation (511) propre à être fixée à l'un de la première partie de châssis (311) et de la traverse longitudinale (36), et une portion de jonction (512) propre à être pressée entre la première partie de châssis (311) et la première extrémité (361) de la traverse longitudinale (36), et/ou le deuxième joint (52) présente une portion de fixation propre à être fixée à l'un du cadre (34) et de la traverse longitudinale (36), et une portion de jonction propre à être pressée entre le cadre (34) et la deuxième extrémité (362) de la traverse longitudinale (36).

6. Boîtier selon l'une des revendications 1 à 5, comprenant un capot (37) propre à être monté sur la traverse longitudinale (36), le capot (37) pouvant être démonté pour autoriser un accès par un opérateur aux modes de raccordement (71).

7. Boîtier selon la revendication 6, dans lequel le capot (37) s'étend d'un côté de la traverse longitudinale (36), le boîtier comprenant un autre capot (38) s'étendant d'un autre côté de la traverse longitudinale (36) et propre à être monté sur la traverse longitudinale (36), l'autre capot (38) pouvant être démonté de manière à autoriser un accès par un opérateur aux modes de raccordement (71).

8. Boîtier selon l'une des revendications 6 et 7, dans lequel chaque capot (37, 38) comprend un premier panneau (371, 381) propre à être fixé sur la traverse longitudinale (36), et un deuxième panneau (372, 382) s'étendant à partir du premier panneau (371, 381), en formant un angle non-nul avec le premier panneau.

9. Boîtier selon l'une des revendications 1 à 8, comprenant une plaque de presse-étoupes (331) propre à être fixée sur la deuxième partie de châssis (312) pour le passage de câbles (81) entre l'extérieur du boîtier de raccordement (3) et l'intérieur du boîtier de raccordement (3) renfermant les modes de raccordement (71) raccordant les câbles électriques (81) à la traversée électrique (2).

10. Boîtier selon l'une des revendications 1 à 9, comprenant une couronne de fixation (40) par l'intermédiaire de laquelle la première partie de châssis (311) est fixée à la traversée électrique (2), la couronne de fixation (40) étant propre à être fixée sur la traversée électrique (2) et à être fixée sur la première partie de châssis (311) ; et
dans lequel la couronne de fixation (40) comprend de préférence une portion annulaire axiale (41) propre à être fixée sur la traversée électrique (2) et une portion annulaire radiale (42) s'étendant à partir de la portion annulaire axiale (41) et propre à être fixée sur la première partie de châssis (311).

11. Boîtier selon l'une des revendications 1 à 10, dans lequel la première partie de châssis (311) et la deuxième partie de châssis (312) sont soudées entre elles.

12. Boîtier selon l'une des revendications 1 à 11, dans lequel la première partie de châssis (311) comprend une paroi de guidage (320) propre à entourer les câbles électriques (81) entre la plaque de presse-étoupe (331) et les modes de raccordement (71).

13. Ensemble de traversée électrique (1) d'enceinte de confinement, comprenant :
une traversée électrique (2) comprenant un conteneur cylindrique (23) et une pluralité de modules de conducteurs électriques (24) s'étendant à l'intérieur du conteneur (23), parallèlement à un axe longitudinal (X) de la traversée électrique (2), et
un premier boîtier (3) selon l'une des revendications 1 à 12, fixé à une première extrémité (26) du conteneur (23) de la traversée électrique (2).

14. Ensemble de traversée électrique (1) d'enceinte de confinement selon la revendication 13, comprenant un deuxième boîtier (4) selon l'une des revendications 1 à 12, fixé à une deuxième extrémité (27) du conteneur (23) de la traversée électrique (2), opposée à la première extrémité (26).

15. Procédé de montage d'un boîtier de raccordement (3) d'une traversée électrique (2) d'enceinte de confinement, comprenant des étapes de :
- fixer un châssis (31) sur une extrémité (21) de la traversée électrique (2), avec une première partie de châssis (311) disposée transversalement par rapport à un axe longitudinal (X) de la traversée électrique (2) et présentant une première ouverture circulaire (313) qui entoure une extrémité (21) de la traversée électrique (2), et une deuxième partie de châssis (312) s'étendant à partir de la première partie de châssis (311), parallèlement à l'axe longitudinal (X) de la traversée électrique (2), le châssis étant formé en une seule pièce unique de matériau,
- raccorder des câbles électriques (81) à la traversée électrique (2) par le biais de modes de raccordement (71), en faisant passer les câbles électriques (81) à travers une deuxième ouverture (319) de la deuxième partie de châssis (312), et
- après avoir fixé le châssis (31) à l'extrémité (21) de la traversée électrique (2), fixer une pluralité de pièces de boîtier (33-38) de manière démontable sur le châssis (31) pour former une enveloppe de protection autour des modes de raccordement des câbles électriques,
dans lequel l'étape de fixer la pluralité de pièces de boîtier (33-38) inclut fixer un cadre de fond (34) sur la deuxième partie de châssis (312), de sorte que les modes de raccordement (71) se trouvent disposés entre la deuxième partie de châssis (312) et le cadre de fond (34), et fixer une première extrémité (361) d'une traverse longitudinale (36) sur la première partie de châssis (311) et une deuxième extrémité (362) de la traverse longitudinale (36) sur le cadre de fond (34).

## Patentansprüche

1. Anschlussgehäuse (3) einer elektrischen Durchführung (2) einer Sicherheitshülle, umfassend:
einen Rahmen (31), der aus einem einzigen Stück Material gebildet ist, wobei der
Rahmen (31) einen ersten Rahmenteil (311) aufweist, der dazu bestimmt ist, quer zu einer Längsachse (X) der elektrischen Durchführung (2) angeordnet zu werden, wobei der erste Rahmenteil (311) eine erste kreisförmige Öffnung (313) aufweist, die ein Ende (21) der elektrischen Durchführung (2) umgeben kann, um den Rahmen (31) an dem Ende (21) der elektrischen Durchführung (2) zu befestigen, und einen zweiten Rahmenteil (312), der sich vom ersten Rahmenteil (311) aus parallel zur Längsachse (X) der elektrischen Durchführung (2) erstreckt, um eine Stopfbuchsenplatte (331) für den Durchgang von Kabeln (81) zwischen der Außenseite des Anschlusskastens (3) und der Innenseite des Anschlusskastens (3) zu tragen, und mehrere Gehäuseteile (33-38), die lösbar am Rahmen (31) befestigbar sind, um eine Schutzhülle um Verbindungselemente (71) zu bilden, die die elektrischen Kabel (81) mit der elektrischen Durchführung (2) verbinden,
wobei die mehreren Gehäuseteile (33-38) einen Bodenrahmen (34), der an dem zweiten Rahmenteil (312) befestigbar ist, so dass die Verbindungselemente (71) zwischen dem zweiten Rahmenteil (312) und dem Bodenrahmen (34) angeordnet sind, und einen Längsträger (36) aufweisen, der ein erstes Ende (361) aufweist, das am ersten Rahmenteil (311) befestigbar ist, und ein zweites Ende (362) aufweist, das am Bodenrahmen (34) befestigbar ist.

2. Gehäuse nach Anspruch 1, mit einer Bodenplatte (35), die am Bodenrahmen (34) befestigbar ist.

3. Gehäuse nach einem der Ansprüche 1 und 2, mit einer Dichtung (53),
die zwischen dem Bodenrahmen (34) und dem zweiten Rahmenteil (312) eingesetzt werden kann, um eine dichte Verbindung zwischen dem Bodenrahmen (34) und dem zweiten Rahmenteil (312) herzustellen; und
wobei die Dichtung (53) vorzugsweise einen Befestigungsabschnitt, der an dem Bodenrahmen (34) oder dem zweiten Rahmenteil (312) befestigt werden kann, und einen Verbindungsabschnitt aufweist, der zwischen den Bodenrahmen (34) und den zweiten Rahmenteil (312) gedrückt werden kann.

4. Gehäuse nach einem der Ansprüche 1 bis 3, mit einer ersten Dichtung (51), die zwischen dem ersten Rahmenteil (311) und dem ersten Ende (361) des Längsträgers (36) angeordnet werden kann, um eine erste dichte Verbindung zwischen dem ersten Rahmenteil (361) und dem Querträger (36) herzustellen, und eine zweite Dichtung (52), die zwischen dem Bodenrahmen (34) und dem zweiten Ende (362) des Längsträgers (36) angeordnet werden kann, um eine zweite dichte Verbindung zwischen dem Bodenrahmen (34) und dem Längsträger (36) herzustellen.

5. Gehäuse nach Anspruch 4, wobei die erste Dichtung (51) einen Befestigungsabschnitt (511), der an einem der ersten Rahmenteile (311) und dem Längsträger (36) befestigt werden kann, und einen Verbindungsabschnitt (512), der zwischen den ersten Rahmenteil (311) und das erste Ende (361) des Längsträgers (36) pressbar ist, und/oder die zweite Dichtung (52) einen Befestigungsabschnitt aufweist, der an einem des Rahmens (34) und des Längsträgers (36) befestigt werden kann, und einen Verbindungsabschnitt aufweist, der zwischen den Rahmen (34) und das zweite Ende (362) des Längsträgers (36)

6. Gehäuse nach einem der Ansprüche 1 bis 5, mit einer Haube (37), die an dem Längsträger (36) montierbar ist, wobei die Haube (37) demontierbar ist, um einem Bediener Zugang zu den Verbindungselemente (71) zu ermöglichen.

7. Gehäuse nach Anspruch 6, wobei sich die Abdeckung (37) auf einer Seite des Längsträgers (36) erstreckt, wobei das Gehäuse eine weitere Abdeckung (38) umfasst, die sich auf einer anderen Seite des Längsträgers (36) erstreckt und an dem Längsträger (36) montierbar ist, wobei die weitere Abdeckung (38) demontierbar ist, um einem Bediener Zugang zu den Verbindungselemente (71) zu ermöglichen.

8. Gehäuse nach einem der Ansprüche 6 und 7, wobei jede Abdeckung (37, 38) eine erste Platte (371, 381), die an dem Längsträger (36) befestigbar ist, und eine zweite Platte (372, 382) aufweist, die sich von der ersten Platte (371, 381) aus in einem Winkel ungleich Null zu der ersten Platte erstreckt.

9. Gehäuse nach einem der Ansprüche 1 bis 8, mit einer Stopfbuchsenplatte (331), die an dem zweiten Rahmenteil (312) befestigbar ist, um Kabel (81) wischen der Außenbereich des Anschlusskastens (3) und den Innenbereich des Anschlusskastens (3) zu führen, der die Verbindungselemente (71) enthält, die die elektrischen Kabel (81) mit der elektrischen Durchführung (2) verbinden.

10. Gehäuse nach einem der Ansprüche 1 bis 9, mit einem Befestigungsring (40), durch die der erste Rahmenteil (311) an der elektrischen Durchführung (2) befestigt ist, wobei der Befestigungsring (40) an der elektrischen Durchführung (2) und am ersten Rahmenteil (311) befestigbar ist; und
wobei der Befestigungsring (40) vorzugsweise einen axialen Ringabschnitt (41) umfasst, der an der elektrischen Durchführung (2) befestigt werden kann, und einen radialen Ringabschnitt (42) umfasst, der sich vom axialen Ringabschnitt (41) aus erstreckt und am ersten Rahmenteil (311) befestigt werden kann.

11. Gehäuse nach einem der Ansprüche 1 bis 10, wobei der erste Rahmenteil (311) und der zweite Rahmenteil (312) miteinander verschweißt sind.

12. Gehäuse nach einem der Ansprüche 1 bis 11, wobei der erste Rahmenteil (311) eine Führungswand (320) aufweist, die dazu geeignet ist, die elektrischen Kabel (81) zwischen der Stopfbuchsenplatte (331) und dem ersten Rahmenteil (311) zu umgeben (311) eine Führungswand (320) aufweist, die die elektrischen Kabel (81) zwischen der Stopfbuchsenplatte (331) und den Verbindungselemente (71) umgeben kann.

13. Elektrische Durchführungsanordnung (1) für ein Gehäuse, umfassend:
eine elektrische Durchführung (2) mit einem zylindrischen Behälter (23) und mehreren elektrischen Leitermodulen (24), die sich innerhalb des Behälters (23) parallel zu einer Längsachse (X) der elektrischen Durchführung (2) erstrecken, und
ein erstes Gehäuse (3) gemäß einem der Ansprüche 1 bis 12, das an einem
einem ersten Ende (26) des Behälters (23) der elektrischen Durchführung (2) befestigt ist.

14. Elektrische Durchführungsanordnung (1) für eine Sicherheitshülle gemäß Anspruch 13, mit einem zweiten Gehäuse (4) gemäß einem der Ansprüche 1 bis 12, das an einem zweiten Ende (27) des Behälters (23) der elektrischen Durchführung (2) gegenüber dem ersten Ende (26) befestigt ist.

15. Verfahren zum Montieren eines Anschlussgehäuses (3) einer elektrischen Durchführung (2) eines Sicherheitsbehälters, mit den folgenden Schritten:
- Befestigen eines Rahmens (31) an einem Ende (21) der elektrischen Durchführung (2), wobei ein erster Rahmenteil (311) quer zu einer Längsachse (X) der elektrischen Durchführung (2) angeordnet ist und eine erste kreisförmige Öffnung (313) aufweist, die ein Ende (21) der elektrische Durchführung (2) umschließt, und einem zweiten Rahmenteil (312), das sich von dem ersten Rahmenteil (311) aus parallel zu der Längsachse (X) der elektrischen Durchführung (2) erstreckt, wobei der Rahmen aus einem einzigen Materialstück gebildet ist,
- Verbinden von elektrischen Kabeln (81) mit der elektrischen Durchführung (2) über Verbindungselemente (71), wobei die elektrischen Kabel (81) durch eine zweite Öffnung (319) des zweiten Rahmenteils (312) geführt werden, und
- nach dem Befestigen des Rahmens (31) am Ende (21) der elektrischen Durchführung (2) Befestigen einer Vielzahl von Gehäuseteilen (33-38) in lösbarer Weise am Rahmen (31), um eine Schutzhülle um die Verbindungsstellen der elektrischen Kabel herum zu bilden, wobei der Schritt des Befestigens der mehreren Gehäuseteile (33-38) das Befestigen eines Bodenrahmens (34) an dem zweiten Rahmenteil (312) umfasst, so dass die Verbindungselemente (71) zwischen dem zweiten Rahmenteil (312) und dem Bodenrahmen (34) angeordnet sind, und Befestigen eines ersten Endes (361) eines Längsträgers (36) an dem ersten Rahmenteil (311) und eines zweiten Endes (362) des Längsträgers (36) an dem Bodenrahmen (34).

## Claims

1. Connection housing (3) for an electrical feedthrough (2) of a containment system, comprising :
a frame (31) formed from a single piece of material, the frame (31) comprising a first frame portion (311) intended to be arranged transversely relative to a longitudinal axis (X) of the electrical feedthrough (2), the first frame portion (311) having a first circular opening (313) suitable for surrounding an end (21) of the electrical feedthrough (2) for securing the frame (31) to the end (21) of the electrical feedthrough, and a second frame portion (312) extending from the first frame portion (311), parallel to the longitudinal axis (X) of the electrical feedthrough (2), to support a gland plate (331) for the passage of cables (81) between the outside of the connection housing (3) and the inside of the connection housing (3), and
a plurality of housing parts (33-38) adapted to be releasably fixed to the frame (31) to form a protective enclosure around connection elements (71) connecting the electrical cables (81) to the electrical feedthrough (2),
wherein the plurality of housing parts (33-38) comprises a bottom frame (34) suitable for being fixed to the second frame portion (312), so that the connection elements (71) are arranged between the second frame portion (312) and the bottom frame (34), and a longitudinal cross member (36) having a first end (361) suitable to be secured to the first frame portion (311) and a second end (362) suitable to be secured to the bottom frame (34).

2. Housing according to claim 1, comprising a base plate (35) suitable for fixing to the bottom frame (34).

3. Housing according to one of claims 1 and 2, comprising a seal (53) suitable for being interposed between the bottom frame (34) and the second frame portion (312) to form a sealed connection between the bottom frame (34) and the second frame portion (312); and
wherein the seal (53) preferably has a fixing portion adapted to be fixed to one of the bottom frame (34) and the second frame portion (312), and a sealing portion adapted to be pressed between the bottom frame (34) and the second frame portion (312).

4. Housing according to one of claims 1 to 3, comprising a first seal (51) suitable for being interposed between the first frame portion (311) and the first end (361) of the longitudinal cross member (36) to form a first sealed connection between the first frame portion (361) and the cross member (36), and a second seal (52) suitable for being interposed between the bottom frame (34) and the second end (362) of the longitudinal cross member (36) to form a second sealed connection between the bottom frame (34) and the longitudinal cross member (36).

5. Housing according to claim 4, wherein the first seal (51) has a fixing portion (511) adapted to be fixed to one of the first frame portion (311) and the longitudinal cross member (36), and a fixing portion (512) adapted to be fixed to the other of the first frame portion (311) and the first end (361) of the longitudinal cross member (36) and/or the second seal (52) has a fixing portion suitable for being fastened to one of the frame (34) and the second end (362) of the cross member longitudinal (36). and the longitudinal cross member (36), and a fixing portion suitable for being pressed between the frame (34) and the second end (362) of the longitudinal cross member (36).

6. Housing according to one of claims 1 to 5, comprising a cover (37) adapted to be mounted on the longitudinal cross member (36), the cover (37) being removable to allow access by an operator to the connection elements (71).

7. Housing according to claim 6, wherein the cover (37) extends on one side of the longitudinal cross member (36), the housing comprising a further cover (38) extending on another side of the longitudinal cross member (36) and adapted to be mounted on the longitudinal cross member (36), the further cover (38) being removable to allow access by an operator to the connection elements (71).

8. Housing according to one of claims 6 and 7, wherein each cover (37, 38) comprises a first panel (371, 381) suitable for fixing to the longitudinal cross member (36), and a second panel (372, 382) extending from the first panel (371, 381), forming a non-zero angle with the first panel.

9. Housing according to one of claims 1 to 8, comprising a gland plate (331) suitable for mounting on the second frame portion (312) for the passage of cables (81) between the outside of the connection housing (3) and the inside of the connection housing (3) enclosing the connection elements (71) connecting the electrical cables (81) to the electrical feedthrough (2).

10. Housing according to one of claims 1 to 9, comprising a fastening ring (40) by means of which the first frame portion (311) is fastened to the electrical feedthrough (2), the fastening ring (40) being adapted to be fastened to the electrical feedthrough (2) and to be fastened to the first frame portion (311); and
wherein the fastening ring (40) preferably comprises an axial annular portion (41) adapted to be fixed to the electrical feedthrough (2) and a radial annular portion (42) extending from the axial annular portion (41) and suitable for attachment to the first frame portion (311).

11. Housing according to one of claims 1 to 10, wherein the first frame portion (311) and the second frame portion (312) are welded together.

12. Housing according to one of claims 1 to 11, wherein the first frame portion (311) comprises a guide wall (320) suitable for surrounding the electrical cables (81) between the cable gland plate (331) and the connection elements (71).

13. Electrical feedthrough assembly (1) for a containment vessel, comprising :
an electrical feedthrough (2) comprising a cylindrical container (23) and a plurality of electrical conductor modules (24) extending inside the container (23), parallel to a longitudinal axis (X) of the electrical feedthrough (2), and
a first housing (3) according to one of claims 1 to 12, attached to a first end (26) of the container (23) of the electrical feedthrough (2).

14. Electrical feedthrough assembly (1) for a containment vessel according to claim 13, comprising a second housing (4) according to one of claims 1 to 12, attached to a second end (27) of the container (23) of the electrical feedthrough (2), opposite the first end (26).

15. Method of mounting a connection housing (3) of an electrical feedthrough (2), comprising the steps of
- fastening a frame (31) to an end (21) of the electrical feedthrough (2), with a first frame portion (311) is arranged transversely relative to a longitudinal axis (X) of the electrical feedthrough (2) and having a first circular opening (313) surrounding an end (21) of the electrical feedthrough (2), and a second frame portion (312) extending from the first frame portion (311), parallel to the longitudinal axis (X) of the electrical feedthrough (2), the frame being formed from a single piece of material,
- connecting electrical cables (81) to the electrical feedthrough (2) via connection elements (71), passing the cables (81) through a second opening (319) in the second frame portion (312), and
- after securing the frame (31) to the end (21) of the electrical feedthrough (2), releasably securing a plurality of housing parts (33-38) to the frame (31) to form a protective enclosure around the connection elements,
wherein the step of securing the plurality of housing parts (33-38) includes attaching a bottom frame (34) to the second frame portion (312), so that the connection elements (71) are located between the second frame portion (312) and the bottom frame (34), and attaching a first end (361) of a longitudinal cross member (36) on the first frame portion (311) and a second end (362) of the longitudinal cross member (36) on the bottom frame (34).
